(19)

Europäisches Patentamt

European Patent Office

Office européen des brevets

(11) **EP 4 523 543 B1**

(12) **EUROPEAN PATENT SPECIFICATION**

(45) Date of publication and mention
of the grant of the patent:
**09.07.2025 Bulletin 2025/28**

(21) Application number: **23198010.3**

(22) Date of filing: **18.09.2023**

(51) International Patent Classification (IPC):
*A23L 9/20* (2016.01)    *A23C 13/12* (2006.01)
*A23P 30/40* (2016.01)    *A23L 29/10* (2016.01)

(52) Cooperative Patent Classification (CPC):
(C-Sets available)
**A23C 13/12; A23L 9/20; A23P 30/40;**
A23C 2210/30    (Cont.)

(54) **LOW FAT WHIPPABLE LIQUID DAIRY CREAM COMPOSITION**

FETTARME AUFSCHÄUMBARE FLÜSSIGE MILCHCREMEZUSAMMENSETZUNG

COMPOSITION DE CRÈME LAITIÈRE LIQUIDE FOUETTABLE À FAIBLE TENEUR EN MATIÈRES GRASSES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**19.03.2025 Bulletin 2025/12**

(73) Proprietor: **FrieslandCampina Nederland B.V.
3818 LE Amersfoort (NL)**

(72) Inventors:
• **GELDERS, Greta Gerarda F.
6708 WH Wageningen (NL)**
• **DEPRAETERE, Sofie An
6708 WH Wageningen (NL)**

• **LENAERS, Lieve
6708 WH Wageningen (NL)**
• **BEECKMAN, Koen
6708 WH Wageningen (NL)**
• **WAUTERS, Els
6708 WH Wageningen (NL)**
• **KNUTS, Heidi
6708 WH Wageningen (NL)**

(74) Representative: **FrieslandCampina IP Department
Bronland 20
6708 WH Wageningen (NL)**

(56) References cited:
**EP-A1- 1 226 761    WO-A2-2006/038807
GB-A- 2 437 239**

EP 4 523 543 B1

**(Cont. next page)**

(52) Cooperative Patent Classification (CPC): (Cont.)

C-Sets
A23V 2002/00, A23V 2250/182, A23V 2250/184,
A23V 2250/192

**Description**

**FIELD OF THE INVENTION**

The invention relates to a low fat whippable liquid dairy cream composition, a method of making a low fat whippable liquid dairy cream composition, and a method for producing a low fat whipped dairy cream composition.

**BACKGROUND TO THE INVENTION**

Traditionally, whipped cream is made by whipping the milk fat fraction (cream) separated from whole milk. Conventional whipping cream contains around 30 - 40 wt. % milk fat.
When whipped, the relatively high fat level in the cream provides for good stability of the whipped cream, nice sharp edges of the cream blob (also sometimes referred to as cream dollop) and a full, creamy mouthfeel.
However, health concerns at consumers about the relatively high fat in the cream and relatively high caloric value urged the dairy industry to develop lower fat cream types, e.g. as low as 12 - 25 wt. % fat.
This, however, appeared to be challenging since lowering the fat content of the cream compromised the stability of the whipped cream, and furthermore had a deleterious effect on mouthfeel. To compensate for these technical and sensory defects of reduced fat creams, gelatin (or an alternative thereof) may be added in relatively high amounts.
Spray cream from aerosol spray cans have a lower caloric value per volume than whipped cream, due to - typically - a higher overrun, usually of about 300% or more. However, not only is the firmness and form retention of known spray creams generally not as good as for whipped cream, also the need for propellant gases, such as nitrous oxide or carbon dioxide, is a disadvantage, as these are greenhouse gases.
The need exists therefor to provide a low fat whipping cream that is stable for a prolonged time after whipping, and still exhibits a full and creamy mouthfeel when consumed and of which the cream dollop has an attractive appearance, at least on par with full fat whipped cream. Furthermore, there should not be a need to use any greenhouse gas as propellant.
WO 2006/038807 discloses a low fat (10-20 wt%) dairy cream comprising 0.1-2.0 wt% of a mono- and/or diglyceride containing at least one unsaturated fatty acid group and, preferably, an acetyl or lactyl group. This cream could be whipped to an overrun of 150%.
GB 2437239 discloses a low fat (up to 20%) whipping cream. The majority of fat is non-dairy lauric fat, while only a few percent of the fat originates from dairy cream. The whipping cream further comprises an emulsifier mix containing lactic acid ester, monoglycerides, diglycerides, sorbitan monostearate, and sodium stearyl lactylate.
EP1226761 discloses a milk product that can be foamed by simple hand shaking, said product containing 0-30% fat and three emulsifiers (polyglycerolmonostearate, sorbitantristearate, and unsaturated monoglyceride), and a foam stabilizer.

**SUMMARY OF THE INVENTION**

It has now been found that the technical and sensory properties of a low fat whippable cream could be improved significantly by incorporating in the low fat cream a certain mixture of emulsifiers. With the product of the invention, high overrun can be achieved without using a greenhouse gas as propellant. Furthermore, as no propellant is present, packaging can be reduced as well, which is desirable from a sustainability point of view as well.
Accordingly, in a first aspect, the invention relates to a whippable liquid dairy cream composition containing 13 - 28 wt.% milk fat, said composition comprising:

a. 35 - 60 wt. % dairy cream, which dairy cream preferably has a milk fat content between 38 - 46 wt. % by weight of the dairy cream;
b. 0.05 - 0.15 wt.% of a first emulsifier comprising mono- and/or diglycerides of fatty acids having an iodine value of less than 10;
c. 0.1 - 0.35 wt.% of a second emulsifier comprising mono- and/or diglycerides of fatty acids having an iodine value of 40 - 80;
d. 0.05 - 0.15 wt.% of a third emulsifier comprising mono- and/or diglycerides of fatty acids having an iodine value of 85 - 150;
e. 0.4 - 1.2 wt.% of a fourth emulsifier selected from the group of lactic acid esters of mono- and/or diglycerides of fatty acids, acetic acid esters of mono- and/or diglycerides of fatty acids, and mixtures thereof;
f. 20 - 58 wt.% water, milk or mixtures thereof;

wherein the first, second, third and fourth emulsifier differ from each other, with weight percentages being based on total weight of the whippable liquid dairy cream composition.

In a second aspect, the invention relates to a method of preparing a whippable liquid dairy cream composition, the method comprising:

i. preparing a mixture of

a. 35 - 60 wt. % dairy cream preferably with a fat content between 38 - 46 wt. % milk fat;
b. 0.05 - 0.15 wt.% of a first emulsifier comprising mono- and/or diglycerides of fatty acids having an iodine value of less than 10;
c. 0.1 - 0.35 wt.% of a second emulsifier comprising mono- and/or diglycerides of fatty acids having an iodine value of 40 - 80;
d. 0.05 - 0.15 wt.% of a third emulsifier comprising mono- and/or diglycerides of fatty acids having an iodine value of 85 - 150;
e. 0.4 - 1.2 wt.% of a fourth emulsifier selected from the group of lactic acid esters of mono- and/or diglycerides of fatty acids, acetic acid esters of mono- and/or diglycerides of fatty acids, and mixtures thereof; and
f. 20 - 58 wt.% water, milk or mixtures thereof;

wherein the first, second, third, and fourth emulsifier differ from each other,
i. heating the mixture obtained in step (i.), preferably using a UHT process; and
ii. homogenizing the heated mixture, preferably by a two-step homogenization process resulting in the whippable liquid dairy cream composition;

with the weight percentages being based on the total weight of said whippable liquid dairy cream composition.
In a further aspect, the invention relates to a method of preparing a whipped cream composition comprising the step of whipping said whippable liquid dairy cream, preferably to an overrun of 200 - 500 %.

## DETAILED DESCRIPTION

It has been found that when the low fat whippable liquid dairy cream composition according to the invention contains a low amount of specific emulsifiers, a good stability of the cream blob could be obtained. Furthermore the cream blob had a good firmness and high overrun, and has also a very good and creamy mouthfeel, resembling that of full fat whipped cream.
These emulsifiers are characterized by their degree of unsaturation or saturation of their fatty acid chains, and in other cases by their ester derivatives.
The degree of unsaturation is defined by the so-called iodine value, which is well known in the art. The iodine value (IV) can be determined according to a gas chromatographic analysis as described in AOAC Cd 1c-85; ISO 3961:2018.
Accordingly, the invention relates to a whippable liquid dairy cream composition containing 13 - 28 wt.% milk fat, said composition comprising:

a. 35 - 60 wt. % dairy cream, which dairy cream preferably has a milk fat content between 38 - 46 wt. % by weight of the dairy cream;
b. 0.05 - 0.15 wt.% of a first emulsifier comprising mono- and/or diglycerides of fatty acids having an iodine value of less than 10;
c. 0.1 - 0.35 wt.% of a second emulsifier comprising mono- and/or diglycerides of fatty acids having an iodine value of 40 - 80;
d. 0.05 - 0.15 wt.% of a third emulsifier comprising mono- and/or diglycerides of fatty acids having an iodine value of 85 - 150;
e. 0.4 - 1.2 wt.% of a fourth emulsifier selected from the group of lactic acid esters of mono- and/or diglycerides of fatty acids, acetic acid esters of mono- and/or diglycerides of fatty acids, and mixtures thereof;
f. 20 - 58 wt.% water, milk or mixtures thereof;

wherein the first, second, third and fourth emulsifier differ from each other, with weight percentages being based on total weight of the whippable liquid dairy cream composition.
Dairy cream is a term known in the art and relates to the liquid fat fraction separated from whole milk of mammals, preferably bovines, most preferably cows. Separation of the fat from the milk may be done with for example a centrifuge.
The first emulsifier present in the whippable liquid dairy composition in accordance with the invention is an emulsifier comprising mono- and/or diglycerides of fatty acids having an iodine value of less than 10. Typically, said emulsifier is a mixture of monoglycerides of fatty acids and diglycerides of fatty acids. It is preferred that the first emulsifier has an iodine value of less than 8, more preferably less than 6, even more preferably less than **4,** most preferably less than 3. Preferably, the first emulsifier comprising mono- and/or diglycerides of fatty acids having an iodine value of less than 10 comprise C16:0 and C18:0 fatty acid chains together in an amount of preferably more than 90 wt. % monoglycerides of fatty acids based on the total weight of the fatty acids chains.

The second emulsifier present in the whippable liquid dairy composition in accordance with the invention is an emulsifier comprising mono- and/or diglycerides of fatty acids having an iodine value of 40 - 80. Typically, this second emulsifier is a mixture of monoglycerides of fatty acids and diglycerides of fatty acids. The second emulsifier comprising mono- and/or diglycerides of fatty acids preferably has an iodine value of 45 - 75, more preferably 50 - 70, most preferably 55 - 65. Preferably, the second emulsifier comprises 90 wt. % or more monoglycerides of fatty acids, based on total weight of the mono- and/or diglycerides of fatty acids.

The third emulsifier present in the whippable liquid dairy composition in accordance with the invention is an emulsifier comprising mono- and/or diglycerides of fatty acids having an iodine value of 85 - 150. Typically, this third emulsifier is a mixture of monoglycerides of fatty acids and diglycerides of fatty acids. The third emulsifier comprising mono- and/or diglycerides of fatty acids preferably has an iodine value of 90 - 130, more preferably 95 - 120, most preferably 100 - 110. Preferably, the third emulsifier comprises 90 wt. % or more of monoglycerides of fatty acids, based on total weight of the mono- and/or diglycerides of fatty acids.

It was found that the wt./wt. ratio between second emulsifier and third emulsifier had a particular positive effect on the properties of the whipped cream in terms of overrun, stability and mouthfeel. Hence, preferably, the wt./wt. ratio between the second emulsifier comprising mono- and/or diglycerides of fatty acids having an iodine value of 40 - 80 and the third emulsifier comprising mono- and/or diglycerides of fatty acids having an iodine value of 85 - 150 in the whippable liquid dairy is 3 : 1 - 1 : 3, more preferably 2.5 : 1 - 1 : 2.5, even more preferably between 2 : 1 - 1 : 2, most preferably 2 : 1 - 1 : 1.

In a preferred embodiment, the whippable liquid dairy composition comprises the second emulsifier comprising mono- and diglycerides of fatty acids having an iodine value of 40 - 80 and the third emulsifier comprising mono- and diglycerides of fatty acids having an iodine value of 85 - 150, wherein preferably the second and/or the third emulsifier each comprise at least 90 wt. % monoglycerides of fatty acids, based on total weight of the mono- and/or diglycerides of fatty acids.

The fourth emulsifier present in the whippable liquid dairy composition in accordance with the invention is an emulsifier selected from the group of lactic acid esters of mono- and/or diglycerides of fatty acids, acetic acid esters of mono- and/or diglycerides of fatty acids, and mixtures thereof. Typically, this emulsifier is a mixture of lactic acid esters of monoglycerides of fatty acids and lactic acid esters of diglycerides of fatty acids; or a mixture of acetic acid esters of monoglycerides of fatty acids and acetic acid esters of diglycerides of fatty acids; or a combination of these two mixtures. Preferably, the fourth emulsifier is a lactic acid ester of mono- and/or diglycerides of fatty acids. It is further preferred that if the fourth emulsifier is a lactic acid ester of mono- and/or diglycerides of fatty acids, it comprises fatty acid chains wherein at least 95 wt. %, more preferably at least 97 wt. %, of these fatty acid chains is saturated, based on total weight of the fatty acid chains of the lactic acid ester of mono- and diglycerides. It is further preferred that if the fourth emulsifier is a lactic acid ester of mono- and/or diglycerides of fatty acids, its iodine value is lower than 4.

It is noted that the first, second, third, and fourth emulsifier in the whippable liquid dairy cream composition differ from each other.

It is furthermore preferred that the first, second and third emulsifier do not comprise a lactic acid ester of mono- and/or diglycerides of fatty acids, an acetic acid ester of mono- and/or diglycerides of fatty acids, and mixtures thereof.

It was furthermore found that the presence of certain other emulsifiers negatively affected the performance of the low fat whippable liquid dairy cream composition. The firmness of the whipped cream composition was insufficient, and the mouthfeel was characterized as too soft, fluffy, too quickly melting away in the mouth. This was particularly noticeable if a CITREM ester (citric acid ester of mono- and/or diglycerides of fatty acids) was used. Accordingly, preferably, the whippable liquid dairy cream composition according to the invention is devoid of citric acid ester of mono- and/or diglycerides of fatty acids. More preferably, the whippable liquid dairy cream composition is devoid of saturated CITREM and/or unsaturated CITREM.

Good results have been obtained with milk fat amounts around 20 wt. % in the whippable liquid cream composition. Accordingly, the whippable liquid dairy cream composition preferably comprises 15 - 25 wt. % milk fat, more preferably 18 - 22 wt. % milk fat, with the weight percentages being based on the total weight of the whippable liquid cream composition.

To optimize the taste of the whippable liquid dairy cream composition of the invention, sugars may be included. Accordingly, the whippable liquid dairy cream composition according to the invention preferably comprises at least one sugar selected from the group consisting of sucrose, lactose, glucose, fructose, and mixtures thereof. The at last one sugar is preferably present in the whippable cream composition in an amount of 0 - 10 wt. %, more preferably 1 -9 wt. %, most preferably 2 - 8 wt. %, based on the total weight of the whippable liquid dairy cream composition.

A preferred sugar is sucrose.

Although less preferred, it is possible to replace the at least one sugar with at least one artificial sweetener, in which case said artificial sweetener is preferably selected from the group consisting of acesulfame potassium, advantame, aspartame, neotame, saccharin, sucralose, luo han guo, stevia, and mixtures thereof.

The whippable liquid dairy cream composition may further comprise at least one protein. It is therefore preferred that the whippable liquid dairy cream composition according to the invention comprises milk protein. The milk protein is preferably present in an amount of 0.5 - 4. 0 wt. %, more preferably 1.0 - 3.5 wt. %, based on the total weight of the whippable liquid dairy cream composition.

Furthermore, the whippable liquid cream composition according to the invention may comprise a stabilizer, such as a stabilizing polysaccharide. Particularly suitable is a stabilizing gum. Typically, a stabilizer is used if creaming up during storage is to be kept to a minimum or even prevented. Hence, in one embodiment the whippable liquid dairy cream composition according to the invention comprises a stabilizer selected from the group consisting of carrageenan, locust bean gum, xanthan gum, guar gum, alginate, and mixtures thereof. If present, the stabilizer content preferably lies in the range of 0.0005 - 4 wt. %, more preferably 0.001 - 1 wt. %, most preferably 0.005 - 0.1 wt. %, based on the total weight of the whippable liquid dairy cream composition. The skilled person will be able to determine a particularly suitable concentration dependent on the specific stabilizer used, on the basis of common general knowledge and the information provided herein. The preferred stabilizer is carrageenan. Preferably, carrageenan is present in an amount of 0.005 - 0.05 wt. %, based on the total weight of the whippable liquid dairy cream composition.

The whippable liquid dairy cream composition preferably has a solids content of between 30 - 45 wt. %, more preferably 32 - 43 wt. %, most preferably 33 - 40 wt. %.

The whippable liquid dairy cream composition comprises 20 - 58 wt. %, preferably 22 - 56 wt. %, more preferably 28 - 55 wt. %, most preferably 30 - 50 wt. % water, milk or mixtures thereof. Preferably, the whippable liquid dairy composition comprises milk, more preferably skim milk. Preferably, the amounts of milk, preferably skim milk, are the same as said above for the water, milk or mixtures thereof.

In a second aspect, the invention relates to a method of preparing a whippable liquid dairy cream composition, the method comprising:

    i. preparing a mixture of

        a. 35 - 60 wt. % a dairy cream preferably with a fat content between 38 - 46 wt. % milk fat;
        b. 0.05 - 0.15 wt.% of a first emulsifier comprising mono- and/or diglycerides of fatty acids having an iodine value of less than 10;
        c. 0.1 - 0.35 wt.% of a second emulsifier comprising mono- and/or diglycerides of fatty acids having an iodine value of 40 - 80;
        d. 0.05 - 0.15 wt.% of a third emulsifier comprising mono- and/or diglycerides of fatty acids having an iodine value of 85 - 150;
        e. 0.4 - 1.2 wt.% of a fourth emulsifier selected from the group of lactic acid esters of mono- and/or diglycerides of fatty acids, acetic acid esters of mono- and/or diglycerides of fatty acids, and mixtures thereof; and
        f. 20 - 58 wt.% water, milk or mixtures thereof;

    wherein the first, second, third, and fourth emulsifier differ from each other;
    ii. heating the mixture obtained in step (i.), preferably using a UHT process; and
    iii. homogenizing the heated mixture, preferably by a two-step homogenization process resulting in the whippable liquid dairy cream composition;

with the weight percentages being based on the total weight of said whippable liquid dairy cream composition.

To optimize the taste of the whippable liquid dairy cream composition of the invention, sugars may be included in the mixture of step (i). In that case preferably at least one sugar selected from the group consisting of sucrose, lactose, glucose, fructose, and mixtures thereof, is included in the mixture of step (i). The at last one sugar is in that case preferably present in in amount between 0 - 10 wt. %, more preferably 1 -9 wt. %, most preferably 2 - 8 wt. %.

The whippable liquid dairy cream composition according to the invention may also comprise a stabilizer, in which case the stabilizer is preferably selected from the group consisting of carrageenan, locust bean gum, xanthan gum, guar gum, alginate, and mixtures thereof. Hence, the mixture of step (i) may further include a stabilizer. In that case, the stabilizer is preferably present in an amount of 0.0005 - 4 wt. %, more preferably 0.001 - 1 wt. %, most preferably 0.005 - 0.1 wt. %. The preferred stabilizer is carrageenan. Preferably, carrageenan is present in an amount of 0.005 - 0.05 wt. %.

The skilled person will be able to prepare the mixture of step (i) using the conventional techniques known in the art. E.g. as the skilled person will know, it may be preferred to melt emulsifier(s) first, before mixing. In a preferred embodiment step (i) of the method comprises the following steps:

-    mixing emulsifiers (b), (c), (d), and (e), and optionally sugars and/or stabilizer, with water, milk, or mixtures thereof, to obtain a first phase;

- providing dairy cream, optionally with sugars dissolved therein to obtain a second phase;

- mixing the first and second phase to obtain the mixture of step i.

If milk is used as component (f), the milk is preferably skim milk.

Homogenization step iii. can be carried out using conventional equipment and conditions. Preferably, the homogenization step iii. is carried out as a two-step homogenization, wherein preferably the first step is carried out at a pressure between 60 - 100 bar, and the second step preferably at a pressure of 5 - 15 bar, preferably at a temperature of 70 - 80°C.

A UHT (ultra high temperature) process is heating technique known in the art and the skilled person is familiar how to execute it. The UHT process is preferably carried out at a temperature of 135 - 150 °C, more preferably 140 - 145 °C. Preferably , the heating process is carried out for 1 - 8 seconds, more preferably 2 - 6 seconds, most preferably 3 - 5 seconds.

The UHT process is preferably a direct heating process. The direct heating process is preferably a steam injection process, or a steam infusion process. The skilled person is familiar with these kind of direct heating processes.

In a further aspect, the invention relates to a method of preparing a whipped cream composition comprising whipping the whippable liquid dairy composition, preferably to an overrun of 200 - 500 %, more preferably 250 - 450 %, most preferably 300 - 400 %.

The term "overrun" is defined by means of the following formula, denoted as formula A:

$$\textbf{Overrun} = (\ [\ V \ x \ density \ / \ weight\ ] - 1\ )\ X\ 100\%$$

Wherein V = volume of the recipient

density = density of liquid composition (g/ml)

weight = weight of the whipped/foamed composition in the recipient (g)

More information on how to determine overrun is set out in detail below in the experimental section.

Preferably, whipping can be done with any suitable whipping machine known in the art, for example with an industrial whipping machine equipped with a rotor/stator whipper or with a static mixer. Examples of such machines are e.g. Sanomat® or Mussana® or Taylor whipped cream dispenser.

In an embodiment, whipping may be done manually with a whisk or with a household mixer.

In a particular preferred embodiment, the whipping can be done using a cross-flow membrane machine. Such a most preferred machine is disclosed in WO 2022/066019.

The present invention is further exemplified by the following, non-limiting Examples:

**EXAMPLES.**

*Determination of overrun:*

The overrun is the volume increase in terms of volume of whipped or foamed composition (cream) vis-a-vis liquid composition (cream). The overrun is determined by the relation between the density of the liquid and the density of the whipped/foamed composition. To measure the overrun, a recipient (cup) of 205 ml is filled with whipped/foamed composition. The composition is levelled with the upper rim of the recipient and the weight of the contents of the recipient is determined. A larger quantity of air in the whipped/foamed composition will lead to a lower density and thus a lower weight.

$$\text{Overrun} = (\ V \ x \ density \ / \ weight) - 1)\ X\ 100\%$$

Where: V = volume of the recipient (205 ml)

density = density of liquid composition (g/ml)

weight= weight of the whipped/foamed composition in the recipient (g)

E.g.: a weight of 95 g of whipped cream in a recipient of 205 ml and liquid cream with a density of= 0.995 g/ml

→

$$(( 205 \times 0.995 / 95) - 1) \times 100 = 115\%$$

*Determination of firmness:*

The firmness is measured using a Texture Analyser (Stable Micro Systems TA-XT Plus). This device inserts a cylinder (Perspex, 25mm diameter and 40 mm height) with a constant speed (1 mm/s) and distance (20 mm) into the product (whipped/foamed composition). The maximal force the machine must use to penetrate into the product measures the firmness of the product. The firmness of the whipped or foamed product is expressed in grams. The higher the value, the firmer the whipped or foamed product.

Form retention is the firmness of the whipped or foamed composition which is measured after a certain time at a certain temperature. In the examples, unless specified otherwise the form retention was determined after 60 minutes at 4°C. Form retention may also be expressed as a percentage of remaining firmness compared to the firmness directly after whipping or foaming.

*Specific parameters to judge the quality* of a *whipped cream (visual blob).*

Taste panel judgement criteria for the visual and sensory parameters of whipped creams are as follows:

**Angle of the edges:**

sharp edge: associated with a firm whipped cream which remains standing

Blunt(soft) edge: associated with a weak, melted whipped cream

Scale: 0 - 10

0 is very weak

10 is very sharp

**Shine visual aspect:**

Dry aspect: associated with matt and firm whipped cream

Glossy aspect: associated with watery texture

Scale: 0 - 10

0 is very glossy

10 is very dry

**Example 1. Preparation of a low fat, whippable liquid dairy composition according to the invention.**

0.2 kg emulsifier 2 (Dimodan® R-T ex DuPont Danisco/IFF, a mono-/diglyceride (E471) with an iodine value of approximately 60 and a total amount of monoglyceride of min 90%), 0.1 kg emulsifier 3 (Dimodan® UJ ex DuPont Danisco, a mono-/diglyceride (E471) with an iodine value of 105, consisting of 96% monoglycerides) and 0.8 kg emulsifier 4 (Admul™ GLP 2033 ex Kerry (E472b), a lactic acid ester of mono-/diglycerides of fatty acids (Lactem)) were melted until liquid in an au bain-marie. Emulsifier 2, 3 and 4 were dispersed in 43.79 kg cold (4°C) skim milk under fierce stirring with a silverson mixer. Thereafter, 8 kg of sucrose, 0.01 kg of carrageenan and 0.1 kg emulsifier 1 Myverol 18-04K, ex Kerry (a mono-/diglyceride (E471) with an iodine value of 3) were added and mixed in the skim milk with emulsifiers 2, 3 and 4.

8

The resulting milk mixture was then carefully mixed with 47 kg cold (4°C) cream (43% fat) to form 100 kg of a pre-emulsion.

Subsequently, this milk/cream mixture was UHT treated using direct steam injection (143°C/4 sec). after which the UHT treated cream/milk composition was homogenized at (75°C 85/10 bars) in a two-stage homogenizer. The resultant emulsion was then cooled directly to 4°C and filled into a container.

*TABLE 1:*

| Example | | 1 |
|---|---|---|
| Component (in kg) | | |
| Dairy Cream (43% fat) | | 47 |
| skim milk | | 43.79 |
| sucrose | | 8 |
| stabilizer | carrageenan (E407) | 0.01 |
| Emulsifier 1 | Myverol 18-04K | 0.1 |
| Emulsifier 2 | Dimodan RT | 0.2 |
| Emulsifier 3 | Dimodan UJ | 0.1 |
| Emulsifier 4 | Lactem (E472b) | 0.8 |
| | | |
| **(All components in wt.%)** | **Sum:** | **100** |
| | | |
| | | |
| Resulting in: | Milk fat (wt%) | 20 |
| | Milk protein (wt%) | 2.9 |
| | Sucrose (wt%) | 8 |
| | Dry matter (wt%) | 37 |

The cream composition of Example 1 was subsequently whipped with either a whipping machine as disclosed in WO 2022/066019 or a Taylor whipping machine. The resulting blobs were evaluated for their overrun, firmness (direct and after 1 hour), texture, angle of the edges, and shine, measured and rated as indicated above. The results are summarized in Tables 5 and 6 below.

**Comparative Examples 2 - 4: Low fat, whippable liquid dairy composition with different emulsifier combinations**

With reference to Example 1, several foamable/whippable low fat cream (20% wt. fat) compositions were made as follows: emulsifiers were melted, next emulsifiers, stabilizers and sugar were mixed in skim milk, while mixing with a Silverson mixer and thereafter the resultant mixture was poured in the dairy cream. The cream mixtures were sterilized (143°C, 4 sec) and subsequently homogenized at 40/10 bars (2 stages), followed by cooling to 4°C. The exact compositions of these samples are summarized in Table 2.

The following citric acid esters of mono- and diglycerides were tested: an unsaturated Grinsted Citrem LR 10 from Dupont, having an acid value of 20-40, a saponification value of 245-275 and a iodine value of about 65 (E472c) and a saturated Radiamuls 2932K, obtained from Oleon, having an acid value of 15-30, a saponification value of 255-275 and a iodine value of 3 or lower.

The cream compositions of especially Comparative Examples 2 and 4, showed when whipped with either a whipping machine as disclosed in WO 2022/066019 or a Taylor whipping machine a much lower overrun as compared to the composition of Example 1. Furthermore, the firmness 'direct' was below a minimum acceptable required firmness of 75 for both whipping methods, as shown in Tables 5 and 6. The blobs of Comparative Examples 2 and 4 had a fluffy and too soft mouthfeel. The cream composition of Comparative Example 3 had a slightly higher overrun, more in the direction of Example 1, but still lacking firmness which is noticeable in too little body, melting away quite rapidly in the mouth. Blobs of whipped cream of Examples 2-3-4 were considered as glossy and less sharp (see Tables 5 and 6).

9

*TABLE 2:*

| Comparative Example | | 2 | 3 | 4 |
|---|---|---|---|---|
| Component (in kg) | | | | |
| Dairy Cream (43% fat) | | 47 | 47 | 47 |
| water | | 44.14 | 43.99 | 43.99 |
| sucrose | | 8 | 8 | 8 |
| stabilizer | carrageenan (E407) | 0.01 | 0.01 | 0.01 |
| Emulsifier 1 | Myverol 18-04K | - | - | - |
| Emulsifier 2 | Dimodan RT | 0.4 | 0.4 | 0.4 |
| Emulsifier 3 | Dimodan UJ | - | - | - |
| Emulsifier 4 | Lactem (E472b) | 0.45 | 0.45 | 0.45 |
| Emulsifier unsaturated Citrem (E472c) | Grindsted® Citrem LR10 | - | 0.15 | - |
| Emulsifier saturated Citrem (E472c) | Radiamuls 2932K | - | - | 0.15 |
| | | | | |
| **(All components in wt.%)** | Sum: | **100** | **100** | **100** |
| | | | | |
| | | | | |
| Resulting in: | Milk fat (wt%) | 20 | 20 | 20 |
| | Milk protein (wt%) | 1.5 | 1.5 | 1.5 |
| | Sucrose (wt%) | 8 | 8 | 8 |
| | Dry matter (wt%) | 33 | 33 | 33 |

**Examples 5 - 8: Low fat, whippable liquid dairy compositions according to the invention**

Compositions 5, 7, and 8 were made in exactly the same manner as described in Example 1 albeit with the compositions as shown in Table 3. Composition 6 was also prepared in the same manner, but was homogenized at 95/10 bars at 75°C instead of 85/10 bars as were the other samples.

*TABLE 3:*

| Example | | 5 | 6 | 7 | 8 |
|---|---|---|---|---|---|
| Component (in kg) | | | | | |
| Dairy Cream (43% fat) | | 47 | 47 | 37.74 | 58 |
| water | | 43.79 | - | - | - |
| skim milk | | - | 43.79 | 53.05 | 32.79 |
| sucrose | | 8 | 8 | 8 | 8 |
| stabilizer | carrageenan (E407) | 0.01 | 0.01 | 0.01 | 0.01 |
| Emulsifier 1 | Myverol 18-04K | 0.1 | 0.1 | 0.1 | 0.1 |
| Emulsifier 2 | Dimodan RT | 0.2 | 0.2 | 0.2 | 0.2 |
| Emulsifier 3 | Dimodan UJ | 0.1 | 0.1 | 0.1 | 0.1 |
| Emulsifier 4 | Lactem (E472b) | 0.8 | 0.9 | 0.8 | 0.8 |
| | | | | | |
| **(All components in wt.%)** | Sum: | **100** | **100** | **100** | **100** |
| | | | | | |

(continued)

| Example | | 5 | 6 | 7 | 8 |
|---|---|---|---|---|---|
| Component (in kg) | | | | | |
| | | | | | |
| Resulting in: | Milk fat (wt%) | 20 | 20 | 16 | 25 |
| | Milk protein (wt%) | 1.5 | 2.9 | 3.2 | 2.8 |
| | Sucrose (wt%) | 8 | 8 | 8 | 8 |
| | Dry matter (wt%) | 33.5 | 37.8 | 33.5 | 41.9 |

Cream examples 5 till 8, all compositions according to the invention, when whipped, resulted in very high overrun combined with excellent texture and visual appearance. Cream blobs gave a very dry and sharp texture and nice full creamy mouthfeel as if it was a high fat whipped cream.

Example 7, although it has the lowest amount of fat, remained comparable or even outperforms on overrun, firmness (direct and after 1 hour), and visual appearance compared to Comparative Examples 2 till 4. It gave an extremely good mouthfeel for such a low fat cream with that high overrun.

## Comparative Examples 9 -10 :

These examples, lacking two or more of the required emulsifiers according to the invention, are prepared in the same manner as described in detail in Example 1.

*TABLE 4:*

| Comparative Example | | 9 | 10 |
|---|---|---|---|
| Component (in kg) | | | |
| Dairy Cream (43% fat) | | 47.61 | 47.61 |
| skim milk | | 43.48 | 43.58 |
| sucrose | | 8 | 8 |
| stabilizer | carrageenan (E407) | 0.01 | 0.01 |
| Emulsifier 1 | Myverol 18-04K | 0.1 | - |
| Emulsifier 2 | Dimodan RT | - | - |
| Emulsifier 3 | Dimodan UJ | - | - |
| Emulsifier 4 | Lactem (E472b) | 0.8 | 0.8 |
| | | | |
| (All components in wt.%) | Sum: | 100 | 100 |
| | | | |
| Resulting in: | Milk fat (%) | 20.5 | 20.5 |
| | Milk protein (%) | 3.0 | 3.0 |
| | Sucrose (%) | 8 | 8 |
| | Dry matter (%) | 37.2 | 37.2 |
| | | | |

Both compositions were found to be whippable but led to unacceptable results especially in direct firmness. Therefore, the firmness was no longer measured after 1 hour. Visual texture was also very poor.

**TABLE 5:** Evaluation of compositions of (Comparative) Examples 1-10 whipped using the whipping machine as disclosed in WO 2022/066019:

| Example | 1 | 2 (comp.) | 3 (comp.) | 4 (comp.) | 5 | 6 | 7 | 8 | 9 (comp.) | 10 (comp.) |
|---|---|---|---|---|---|---|---|---|---|---|
| Overrun (%) | 389 | 321 | 380 | 329 | 441 | 394 | 380 | 383 | 229 | 196 |
| Firmness direct (gf) | 95 | 72 | 83 | 74 | 90 | 98 | 79 | 100 | 45 | 36 |
| *Visual texture direct after whipping:* | | | | | | | | | | |
| Angle of the edges | 8 | 4 | 6 | 3 | 7 | 7 | 7 | 8 | 0 | 0 |
| Shine | 8 | 2 | 4 | 1 | 7 | 7 | 6 | 8 | 0 | 0 |
| | | | | | | | | | | |
| Firmness after 1 hour at 4°C (gf) | 43 | nd | 40 | nd | nd | nd | 40 | 47 | nd | nd |
| *Visual texture after 1 hour:* | | | | | | | | | | |
| Angle of the edges | 5 | 3 | 4 | 3 | 6 | 4 | 5 | 5 | nd | nd |
| Shine | 5 | 1 | 2 | 1 | 5 | 4 | 4 | 4 | nd | nd |

**TABLE 6:** Evaluation of compositions of (Comparative) Examples 1-10 whipped using a Taylor whipping machine

| Example | 1 | 2 (comp.) | 3 (comp.) | 4 (comp.) | 5 | 6 | 7 | 8 | 9 (comp.) | 10 (comp.) |
|---|---|---|---|---|---|---|---|---|---|---|
| Overrun (%) | 336 | 238 | 275 | 247 | 365 | 363 | 278 | 354 | 156 | 139 |
| Firmness direct (gf) | 106 | 55 | 70 | 52 | 108 | 121 | 80 | 145 | 29 | 19 |
| *Visual texture direct after whipping:* | | | | | | | | | | |
| Angle of the edges | 7 | 2 | 2 | 2 | 7 | 8 | 4 | 8 | 0 | 0 |
| Shine | 7 | 3 | 5 | 3 | 7 | 8 | 5 | 8 | 0 | 0 |
| | | | | | | | | | | |
| Firmness after 1 hour at 4°C (gf) | 43 | 18 | 27 | 21 | 42 | 46 | 37 | 53 | nd | nd |
| *Visual texture after 1 hour:* | | | | | | | | | | |
| Angle of the edges | 6 | 1 | 2 | 1 | 5 | 7 | 2 | 7 | nd | nd |
| Shine | 5 | 1 | 2 | 1 | 4 | 7 | 2 | 7 | nd | nd |

**Claims**

1. A whippable liquid dairy cream composition containing 13 - 28 wt.% milk fat, said composition comprising:

   a. 35 - 60 wt% dairy cream, which dairy cream preferably has a milk fat content between 38 - 46 wt. % by weight of the dairy cream;
   b. 0.05 - 0.15 wt.% of a first emulsifier comprising mono- and/or diglycerides of fatty acids having an iodine value of less than 10;
   c. 0.1 - 0.35 wt.% of a second emulsifier comprising mono- and/or diglycerides of fatty acids having an iodine value of 40 - 80;
   d. 0.05 - 0.15 wt.% of a third emulsifier comprising mono- and/or diglycerides of fatty acids having an iodine value of 85 - 150;
   e. 0.4 -1.2 wt.% of a fourth emulsifier selected from the group of lactic acid esters of mono- and/or diglycerides of fatty acids, acetic acid esters of mono- and/or diglycerides of fatty acids, and mixtures thereof;
   f. 20 - 58 wt.% water, milk or mixtures thereof;

   and wherein the first, second, third and fourth emulsifier differ from each other,
   with weight percentages being based on total weight of the whippable liquid dairy cream composition.

2. Whippable liquid dairy cream composition according to claim 1, wherein the wt./wt. ratio between second emulsifier and third emulsifier lies in the range of 3 : 1 to 1 : 3.

3. Whippable liquid dairy cream composition according to any one of claim 1 - 2 wherein the second emulsifier and/or the third emulsifier comprise at least 90 wt.% monoglycerides of fatty acids.

4. Whippable liquid dairy cream composition according to any one of claims 1 - 3, wherein the whippable liquid dairy cream composition is devoid of citric acid esters of mono- and/or diglycerides of fatty acids.

5. Whippable liquid dairy cream composition according to any one of claim 1 - 4 wherein the fourth emulsifier is a lactic acid ester of mono- and/or diglycerides of fatty acids.

6. Whippable liquid dairy cream composition according to claim 5, wherein the lactic ester of mono-and/or diglycerides comprises fatty acid chains wherein at least 97 wt. % of the fatty acid chains is saturated, based on total weight of the fatty acid chains of the lactic acid ester of mono- and diglycerides.

7. Whippable liquid dairy cream composition according to any one of claims 1 - 6 containing 17 - 23 wt. % milk fat, preferably 18 - 22 wt. % milk fat, with weigh percentages being based on the total weight of the whippable liquid dairy cream composition.

8. Whippable liquid dairy cream composition according to any one of claims 1 - 7, further comprising milk protein, preferably in an amount of 0.5 - 4.0 wt. %, based on the total weight of the whippable liquid dairy cream composition.

9. Whippable liquid dairy cream composition according to any one of claims 1 - 8, further comprising a stabilizer selected from the group consisting of carrageenan, locust bean gum, xanthan gum, guar gum, alginate, and mixtures thereof; most preferably the stabilizer is carrageenan.

10. Whippable liquid dairy cream composition according to any one of claims 1 - 9 having a dry solids content of 30 - 45 wt. %.

11. Method of preparing a whippable liquid dairy cream composition according to any one of claims 1 - 10, the method comprising:

    i. preparing a mixture of

       a. 35 - 60 wt. % dairy cream preferably with a fat content between 38 - 46 wt. % milk fat;
       b. 0.05 - 0.15 wt.% of a first emulsifier comprising mono- and/or diglycerides of fatty acids having an iodine value of less than 10;
       c. 0.1 - 0.35 wt.% of a second emulsifier comprising mono- and/or diglycerides of fatty acids having an iodine value of 40 - 80;

d. 0.05 - 0.15 wt.% of a third emulsifier comprising mono- and/or diglycerides of fatty acids having an iodine value of 85 - 150;

e. 0.4 - 1.2 wt.% of a fourth emulsifier selected from the group of lactic acid esters of mono- and/or diglycerides of fatty acids, acetic acid esters of mono- and/or diglycerides of fatty acids, and mixtures thereof;

f. 20 - 58 wt.% water, milk, or mixtures thereof;

wherein the first, second, third, and fourth emulsifier differ from each other;

ii. heating the mixture obtained in step (i), preferably using a UHT process; and

iii. homogenizing the heated mixture, preferably by a two-step homogenization process, resulting in the whippable liquid dairy composition;

with the weight percentages being based on the total weight of said whippable liquid dairy cream composition.

12. Method according to claim 11, wherein heating step (ii) is a direct heating UHT process, preferably carried out at a temperature of 135 - 150 °C, preferably for 1 - 8 seconds.

13. Method according to claim 11 or 12, wherein step (iii) is carried out as a two-step homogenization, wherein preferably the first step is carried out at a pressure between 60 - 100 bar, and the second step preferably at a pressure of 5 - 15 bar, preferably at a temperature of 70 - 80°C.

14. Method of preparing a whipped cream composition comprising the step of whipping a whippable liquid dairy cream composition according to any one of claims 1 - 10, preferably to an overrun of 200 - 500 %.

**Patentansprüche**

1. Aufschlagbare flüssige Milchsahnezusammensetzung, die 13-28 Gew.-% Milchfett enthält, wobei die Zusammensetzung umfasst:

a. 35-60 Gew.-% Milchsahne, wobei die Milchsahne vorzugsweise einen Milchfettgehalt zwischen 38 und 46 Gew.-% der Milchsahne aufweist;

b. 0,05-0,15 Gew.-% an einem ersten Emulgator, der Mono- und/oder Diglyceride von Fettsäuren mit einer Iodzahl von weniger als 10 umfasst;

c. 0,1-0,35 Gew.-% an einem zweiten Emulgator, der Mono- und/oder Diglyceride von Fettsäuren mit einer Iodzahl von 40-80 umfasst;

d. 0,05-0,15 Gew.-% an einem dritten Emulgator, der Mono- und/oder Diglyceride von Fettsäuren mit einer Iodzahl von 85-150 umfasst;

e. 0,4-1,2 Gew.-% an einem vierten Emulgator, ausgewählt aus der Gruppe von Milchsäureestern von Mono- und/oder Diglyceriden von Fettsäuren, Essigsäureestern von Mono- und/oder Diglyceriden von Fettsäuren und Gemischen davon;

f. 20-58 Gew.-% Wasser, Milch oder Gemische davon;

und wobei der erste, zweite, dritte und vierte Emulgator voneinander verschieden sind,

wobei die Gewichtsprozentwerte auf das Gesamtgewicht der aufschlagbaren flüssigen Milchsahnezusammensetzung bezogen sind.

2. Aufschlagbare flüssige Milchsahnezusammensetzung nach Anspruch 1, wobei das Gew./Gew.-Verhältnis zwischen dem zweiten Emulgator und dem dritten Emulgator in dem Bereich von 3: 1 bis 1: 3 liegt.

3. Aufschlagbare flüssige Milchsahnezusammensetzung nach einem der Ansprüche 1-2, wobei der zweite Emulgator und/oder der dritte Emulgator wenigstens 90 Gew.-% Monoglyceride von Fettsäuren umfasst.

4. Aufschlagbare flüssige Milchsahnezusammensetzung nach einem der Ansprüche 1-3, wobei die aufschlagbare flüssige Milchsahnezusammensetzung keine Zitronensäureester von Mono- und/oder Diglyceriden von Fettsäuren enthält.

5. Aufschlagbare flüssige Milchsahnezusammensetzung nach einem der Ansprüche 1-4, wobei der vierte Emulgator ein Milchsäureester von Mono- und/oder Diglyceriden von Fettsäuren ist.

**6.** Aufschlagbare flüssige Milchsahnezusammensetzung nach Anspruch 5, wobei der Milchsäureester von Mono- und/oder Diglyceriden Fettsäureketten umfasst, wobei wenigstens 97 Gew.-% der Fettsäureketten gesättigt sind, bezogen auf das Gesamtgewicht der Fettsäureketten des Milchsäureesters von Mono- und Diglyceriden.

**7.** Aufschlagbare flüssige Milchsahnezusammensetzung nach einem der Ansprüche 1-6, enthaltend 17-23 Gew.-% Milchfett, vorzugsweise 18-22 Gew.-% Milchfett, wobei die Gewichtsprozentwerte auf das Gesamtgewicht der aufschlagbaren flüssigen Milchsahnezusammensetzung bezogen sind.

**8.** Aufschlagbare flüssige Milchsahnezusammensetzung nach einem der Ansprüche 1-7, ferner umfassend Milchprotein, vorzugsweise in einer Menge von 0,5-4,0 Gew.-%, bezogen auf das Gesamtgewicht der aufschlagbaren flüssigen Milchsahnezusammensetzung.

**9.** Aufschlagbare flüssige Milchsahnezusammensetzung nach einem der Ansprüche 1-8, ferner umfassend einen Stabilisator ausgewählt aus der Gruppe bestehend aus Carrageenan, Johannisbrotkernmehl, Xanthangummi, Guargummi, Alginat und Gemischen davon; wobei der Stabilisator höchst bevorzugt Carrageenan ist.

**10.** Aufschlagbare flüssige Milchsahnezusammensetzung nach einem der Ansprüche 1-9 mit einem Trockenfeststoffgehalt von 30-45 Gew.-%.

**11.** Verfahren zur Herstellung einer aufschlagbaren flüssigen Milchsahnezusammensetzung nach einem der Ansprüche 1-10, wobei das Verfahren umfasst:

    i. Herstellen eines Gemischs von

        a. 35-60 Gew.-% Milchsahne, vorzugsweise mit einem Fettgehalt zwischen 38 und 46 Gew.-% Milchfett;
        b. 0,05-0,15 Gew.-% an einem ersten Emulgator, der Mono- und/oder Diglyceride von Fettsäuren mit einer Iodzahl von weniger als 10 umfasst;
        c. 0,1-0,35 Gew.-% an einem zweiten Emulgator, der Mono- und/oder Diglyceride von Fettsäuren mit einer Iodzahl von 40-80 umfasst;
        d. 0,05-0,15 Gew.-% an einem dritten Emulgator, der Mono- und/oder Diglyceride von Fettsäuren mit einer Iodzahl von 85-150 umfasst;
        e. 0,4-1,2 Gew.-% an einem vierten Emulgator, ausgewählt aus der Gruppe von Milchsäureestern von Mono- und/oder Diglyceriden von Fettsäuren, Essigsäureestern von Mono- und/oder Diglyceriden von Fettsäuren und Gemischen davon;
        f. 20-58 Gew.-% Wasser, Milch oder Gemische davon;

    wobei der erste, zweite, dritte und vierte Emulgator voneinander verschieden sind;
    ii. Erhitzen des bei Schritt (i) erhaltenen Gemischs, vorzugsweise unter Verwendung eines UHT-Verfahrens; und
    iii. Homogenisieren des erhitzten Gemischs, vorzugsweise durch ein zweistufiges Homogenisierungsverfahren, um die aufschlagbare flüssige Molkereizusammensetzung zu ergeben;

    wobei die Gewichtsprozentwerte auf das Gesamtgewicht der aufschlagbaren flüssigen Milchsahnezusammensetzung bezogen sind.

**12.** Verfahren nach Anspruch 11, wobei der Erhitzungsschritt (ii) ein UHT-Direkterhitzungsverfahren ist, das vorzugsweise bei einer Temperatur von 135-150 °C, vorzugsweise für 1-8 Sekunden, durchgeführt wird.

**13.** Verfahren nach Anspruch 11 oder 12, wobei Schritt (iii) als zweistufige Homogenisierung durchgeführt wird, wobei der erste Schritt vorzugsweise bei einem Druck zwischen 60-100 bar und der zweite Schritt vorzugsweise bei einem Druck von 5-15 bar, vorzugsweise bei einer Temperatur von 70-80 °C, durchgeführt wird.

**14.** Verfahren zur Herstellung einer aufgeschlagenen Sahnezusammensetzung, umfassend den Schritt des Aufschlagens einer aufschlagbaren flüssigen Milchsahnezusammensetzung nach einem der Ansprüche 1-10, vorzugsweise bis zu einem Aufschlag von 200-500 %.

**Revendications**

1. Composition de crème laitière liquide fouettable contenant 13-28 % en poids de graisse de lait, ladite composition comprenant :

   a. 35-60 % en poids de crème laitière, ladite crème laitière ayant de préférence une teneur en graisse de lait comprise entre 38-46 % en poids de la crème laitière ;
   b. 0,05-0,15 % en poids d'un premier émulsifiant comprenant des mono- et/ou diglycérides d'acides gras ayant un indice d'iode inférieur à 10 ;
   c. 0,1-0,35 % en poids d'un deuxième émulsifiant comprenant des mono- et/ou diglycérides d'acides gras ayant un indice d'iode de 40-80 ;
   d. 0,05-0,15 % en poids d'un troisième émulsifiant comprenant des mono- et/ou diglycérides d'acides gras ayant un indice d'iode de 85-150 ;
   e. 0,4-1,2 % en poids d'un quatrième émulsifiant choisi dans le groupe des esters d'acide lactique de mono- et/ou diglycérides d'acides gras, des esters d'acide acétique de mono- et/ou diglycérides d'acides gras, et leurs mélanges ;
   f. 20-58 % en poids d'eau, de lait ou de mélanges de ceux-ci ;
   et dans laquelle les premier, le deuxième, le troisième et le quatrième émulsifiants diffèrent les uns des autres, les pourcentages en poids étant basés sur le poids total de la composition de crème laitière liquide fouettable.

2. Composition de crème laitière liquide fouettable selon la revendication 1, dans laquelle le rapport poids/poids entre le deuxième émulsifiant et le troisième émulsifiant se situe dans la plage de 3 : 1 à 1 : 3.

3. Composition de crème laitière liquide fouettable selon l'une quelconque des revendications 1-2, dans laquelle le deuxième émulsifiant et/ou le troisième émulsifiant comprennent au moins 90 % en poids de monoglycérides d'acides gras.

4. Composition de crème laitière liquide fouettable selon l'une quelconque des revendications 1-3, dans laquelle la composition de crème laitière liquide fouettable est dépourvue d'esters d'acide citrique de mono- et/ou diglycérides d'acides gras.

5. Composition de crème laitière liquide fouettable selon l'une quelconque des revendications 1-4, dans laquelle le quatrième émulsifiant est un ester d'acide lactique de mono- et/ou diglycérides d'acides gras.

6. Composition de crème laitière liquide fouettable selon la revendication 5, dans laquelle l'ester lactique de mono- et/ou diglycérides comprend des chaînes d'acides gras, dans laquelle au moins 97 % en poids des chaînes d'acides gras sont saturées, par rapport au poids total des chaînes d'acides gras de l'ester d'acide lactique de mono- et diglycérides.

7. Composition de crème laitière liquide fouettable selon l'une quelconque des revendications 1-6 contenant 17-23 % en poids de graisse de lait, de préférence 18-22 % en poids de graisse de lait, les pourcentages en poids étant basés sur le poids total de la composition de crème laitière liquide fouettable.

8. Composition de crème laitière liquide fouettable selon l'une quelconque des revendications 1-7, comprenant en outre des protéines de lait, de préférence en une quantité de 0,5-4,0 % en poids, par rapport au poids total de la composition de crème laitière liquide fouettable.

9. Composition de crème laitière liquide fouettable selon l'une quelconque des revendications 1-8, comprenant en outre un stabilisant choisi dans le groupe constitué par un carraghénane, une gomme de caroube, une gomme xanthane, une gomme de guar, un alginate, et des mélanges de ceux-ci ; de manière la plus préférée, le stabilisant est un carraghénane.

10. Composition de crème laitière liquide fouettable selon l'une quelconque des revendications 1-9 ayant une teneur en solides secs de 30-45 % en poids.

11. Procédé de préparation d'une composition de crème laitière liquide fouettable selon l'une quelconque des revendications 1 à 10, le procédé comprenant :

   i. la préparation d'un mélange de

a. 35-60 % en poids de crème laitière ayant de préférence une teneur en matières grasses comprise entre 38-46 % en poids de graisse de lait ;

b. 0,05-0,15 % en poids d'un premier émulsifiant comprenant des mono- et/ou diglycérides d'acides gras ayant un indice d'iode inférieur à 10 ;

c. 0,1-0,35 % en poids d'un deuxième émulsifiant comprenant des mono- et/ou diglycérides d'acides gras ayant un indice d'iode de 40-80 ;

d. 0,05-0,15 % en poids d'un troisième émulsifiant comprenant des mono- et/ou diglycérides d'acides gras ayant un indice d'iode de 85-150 ;

e. 0,4-1,2 % en poids d'un quatrième émulsifiant choisi dans le groupe des esters d'acide lactique de mono- et/ou diglycérides d'acides gras, des esters d'acide acétique de mono- et/ou diglycérides d'acides gras, et leurs mélanges ;

f. 20-58 % en poids d'eau, de lait ou de mélanges de ceux-ci ;

dans lequel les premier, deuxième, troisième et quatrième émulsifiants diffèrent les uns des autres ;

ii. le chauffage du mélange obtenu à l'étape (i), de préférence au moyen d'un processus UHT ; et

iii. l'homogénéisation du mélange chauffé, de préférence par un procédé d'homogénéisation en deux étapes, fournissant la composition laitière liquide fouettable ;

les pourcentages en poids étant basés sur le poids total de ladite composition de crème laitière liquide fouettable.

12. Procédé selon la revendication 11, dans lequel l'étape de chauffage (ii) est un processus UHT à chauffage direct, de préférence réalisé à une température de 135-150 °C, de préférence pendant 1-8 secondes.

13. Procédé selon la revendication 11 ou 12, dans lequel l'étape (iii) est réalisée sous la forme d'une homogénéisation en deux étapes, dans lequel de préférence la première étape est réalisée à une pression comprise entre 60-100 bars, et la seconde étape de préférence à une pression de 5-15 bars, de préférence à une température de 70-80 °C.

14. Procédé de préparation d'une composition de crème fouettée comprenant l'étape de fouettage d'une composition de crème laitière liquide fouettable selon l'une quelconque des revendications 1 à 10, de préférence jusqu'à un débordement de 200-500 %.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006038807 A
- GB 2437239 A
- EP 1226761 A
- WO 2022066019 A